# EUROPÄISCHE PATENTSCHRIFT

(11) **EP 2 483 947 B1**
(45) Veröffentlichungstag und Bekanntmachung des Hinweises auf die Patenterteilung: **22.01.2014**
(21) Anmeldenummer: 10750081.1
(22) Anmeldetag: 18.08.2010
(51) Int. Cl.: H01M 2/10, H01M 2/12, H01M 6/50, H01M 10/50, A62C 99/00

(54) **NOTFALLKÜHLEINRICHTUNG**
EMERGENCY COOLING DEVICE
DISPOSITIF DE REFROIDISSEMENT D'URGENCE

(30) Priorität: 02.10.2009 DE 102009045271
(43) Veröffentlichungstag der Anmeldung: 08.08.2012
(73) Patentinhaber: Robert Bosch GmbH, 70442 Stuttgart (DE)
(72) Erfinder: NORDEN, Roland, 71706 Markgroeningen (DE); FASSNACHT, Jochen, 75365 Calw (DE)
(86) Internationale Anmeldenummer: PCT/EP2010/062009
(87) Internationale Veröffentlichungsnummer: WO 2011/038986

(56) Entgegenhaltungen:
- EP-A1- 2 068 383
- EP-A1- 2 077 592
- WO-A1-2008/120056
- DE-A1- 4 323 499
- JP-A- 2007 027 011
- JP-A- 2008 016 346
- US-A1- 2006 022 634

## Beschreibung

### Stand der Technik

Im Zuge der Entwicklungen für Elektroautomobile und Hybridantriebe für Fahrzeuge mit einer Kombination aus Verbrennungskraftmaschinen und Elektromaschinen werden für zukünftige Fahrzeuggenerationen sehr hohe Anforderungen an Batterien hinsichtlich der Lebensdauer des Energieinhaltes und der Effizienz gerichtet. Um diese Anforderungen zu erreichen, werden viele Batterietypen aktiv, so zum Beispiel mittels eines Kühlmittels, eines Kältemittels oder mittels Luft gekühlt. Bei Batterien, wie zum Beispiel Lithiumionen-Batterien, ist es zudem oftmals sinnvoll eine Abwärmenutzung oder Vorwärmemöglichkeit der Batterie vorzusehen. Dazu ist es in der Regel vorteilhaft, die Batterie thermisch zu isolieren, um thermische Verluste zu reduzieren. Außerdem besitzen Batterien in Fahrzeugen ein verstärktes Gehäuse, um Gefährdungen der Insassen im Falle eines Unfalls oder Beschädigung zu reduzieren. Aus diesem Grunde sind Batterien daher oft in gekapselten, thermisch isolierten Gehäusen untergebracht.

Aus dem Stand der Technik bekannte Energiespeichersysteme werden beispielsweise in den Druckschriften WO 2008/120056 A1, EP 2 068 383 A1, DE 43 23 499 A1 und JP 2008-16346 A genannt.

Einige Batterientypen, wie zum Beispiel Lithiumionen-Batterien, weisen eine sehr hohe Energiedichte auf, dies geht mit dem Nachteil ein her, dass relativ große Energiemengen auf kleinem Raum gespeichert werden, so dass es unter Umständen zu sehr heftigen Reaktionen kommen kann. Kritische Reaktionen können meist durch ein Abkühlen unter eine Grenztemperatur gelöscht bzw. zum Erliegen gebracht werden. Ist eine Batterie, wie zum Beispiel eine Lithiumionen-Batterie, in einem gekapselt thermisch isolierten Gehäuse in einer Fahrzeugkarosserie verbaut, so ist aufgrund der die Batterie umhüllenden, diese isolierenden Konstruktion nahezu kein Löschen oder Abkühlen der Batterie von außen mehr möglich.

Batterien mit sehr hoher Leistungsdichte mit den in Rede stehenden Lithiumionen-Batterien weisen zunehmend das Phänomen der thermischen Mitkopplung auf. Unter dem Phänomen der thermischen Mitkopplung wird verstanden, dass eine Batterie, welche einmal eine kritische Temperatur überschritten hat, immer weiter erwärmt, bis die Batterie verbrannt ist. In einer sehr frühen Phase dieses auch "thermal runaways" genannten Phänomens ist allerdings durch ein sehr schnelles stark erfolgendes Kühlen ein Verhindern dieses "thermal runaways" möglich. Dies kann nicht durch ein Luft- oder Wasserkühlen erreicht werden, da die Auslegung des Kühlsystems auf eine derart rasche und starke Abkühlung zum Verhindern des "thermal runaways", insbesondere von Lithiumionen-Batterien, auf eine derart rasch erfolgende und starke Abkühlung hohe thermischer Massen nicht praktikabel ist.

Zusammenfassend kann festgehalten werden, dass das aufgezeigte Sicherheitsproblem ein Haupthindernis bei der Kommerzialisierung derartiger Batterien darstellt.

### Darstellung der Erfindung

Erfindungsgemäß wird vorgeschlagen, ein hinsichtlich einer Temperaturüberschreitung unerwünschtes Gerät, insbesondere einen elektrischen Energiespeicher wie eine Lithiumionen-Batterie, schnell unterhalb einer bestimmten Schwelltemperatur abzukühlen. Dies wird mittels eines Energiespeichersystems gemäß Anspruch 1 dadurch erreicht, dass eine Druckdifferenz zweier getrennter Behältnisse aufgehoben wird, von dem ein erstes Gasbehältnis in thermischem Kontakt mit kühlenden Punkten des abzukühlenden Gerätes steht und ein weiteres zweites Gasbehältnis dazu dient, die für die Gasexpansion erforderliche Druckdifferenz zum ersten Gasbehältnis herzustellen.

Erfindungsgemäß findet sich im genannten ersten Behältnis eine Flüssigkeit sowie im genannten zweiten Behältnis ein diese Flüssigkeit absorbierendes Material, so zum Beispiel ein Zeolith oder ein Molekularsieb, um die Kühlleistung durch Verdampfungskühlung zu steigern. Weiterhin wird eine Gehäusewand des ersten Behälters besonders spröde ausgelegt, vorzugsweise ist diese an Übergangsstellen zu thermisch kritischen Punkten mit Sollbruchstellen versehen. Das Außengehäuse des weiteren zweiten Gasbehältnisses umschließt bevorzugt das erste Gasbehältnis und besitzt ein in Bezug auf dieses aus weichem Material gefertigtes Gehäuse, welches bei mechanischer Beschädigung deformiert wird, aber nur äußerst schwer undicht wird.

Die Kühlung wird dadurch ausgelöst, dass durch Zerbrechen der spröde ausgelegten Trennwand zwischen dem ersten und dem zweiten Gasbehältnis, so zum Beispiel in Folge eines Unfalles, durch Öffnen eines thermischen Ventils bei Übertemperatur oder durch Ansteuerung eines elektrischen Ventils.

Als Restgas zur Befüllung der beiden Gasbehälter wird erfindungsgemäß ein Inertgas eingesetzt, welches einen Brand auch durch Unterbrechung der Sauerstoffzufuhr hemmen kann. Als Inertgas ist zum Beispiel Stickstoff geeignet oder Edelgase.

Die mit der erfindungsgemäß vorgeschlagenen Lösung erreichbaren Vorteile liegen einerseits in einer hohen erreichbaren thermischen Eigensicherheit. Durch Initiieren des erfindungsgemäß vorgeschlagenen Kühlprozesses lässt sich ein einmaliges Abkühlen eines Energiespeichersystems insbesondere einer Lithium-ionen-Batterie in Richtung unkritischer Temperaturbereiche erreichen. In Kombination mit einer elektrischen Abkopplung wird die Batterie damit in einen eigensicheren Zustand überführt, so dass das Phänomen des "thermal runaways" wirksam unterbunden ist. Als Folge davon kann Gefahr für Leib und Leben der Fahrzeuginsassen vermieden werden sowie ein Kapitalschaden in Gestalt eines vollständigen Abbrennens eines Fahrzeugs verhindert werden.

Bei der erfindungsgemäß vorgeschlagenen Lösung handelt es sich um eine passive bauliche Maßnahme, die keine zwingende elektrische Eigenenergieversorgung zur Überwachung oder zur Einleitung von Gegenmaßnahmen erfordert. Dies ist bei sicherheitsrelevanten Systemen von besonderem Interesse, da Robustheit und Sicherheit erhöht werden, zum Beispiel bei einer defekten Energieversorgung oder bei Überseetransport.

Des Weiteren kann durch die erfindungsgemäß vorgeschlagene Lösung bei Verwendung von inertem Restgas zur Befüllung der Gasbehälter zusätzlich zur thermischen Maßnahme der Abkühlung einer chemischen Oxidation entgegengewirkt werden.

Sind nach dem Auslösen des erfindungsgemäßen Prozesses die Batteriezellen nicht oder nur teilweise beschädigt, kann deren Wiederaufbereitung durch Rückverdampfen der Flüssigkeit erreicht werden.

Hinsichtlich der Umweltverträglichkeit ist zu erwähnen, dass Zeolithe ungiftig, unbrennbar und relativ häufig in der Natur vorkommen, so dass eine sehr hohe Umweltverträglichkeit gegeben ist.

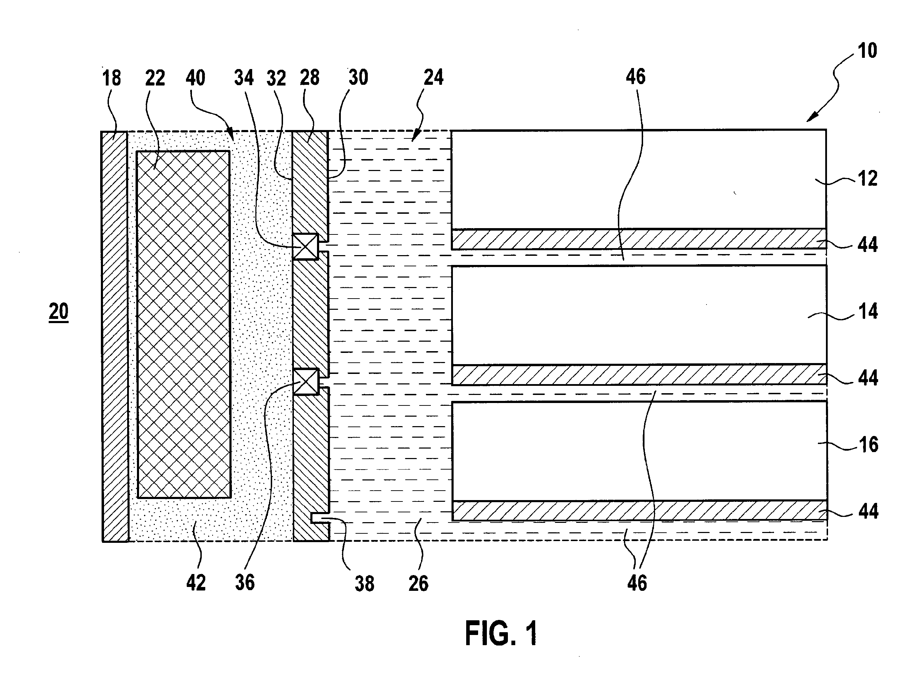

### Kurze Beschreibung der Zeichnung

Anhand der einzigen Figur wird die erfindungsgemäß vorgeschlagene Lösung eingehender beschrieben.

### Ausführungsvariante:

Der einzigen Figur ist der schematische Aufbau des erfindungsgemäß vorgeschlagenen Energiespeichersystems mit integrierter Notkühlung zu entnehmen.

Die Zeichnung zeigt ein Energiespeichersystem. Ein Energiespeichersystem 10 umfasst einen ersten Behälter 24 und einen zweiten Behälter 40. Im Energiespeichersystem 10 gemäß der Zeichnung befinden sich innerhalb des ersten Behälters 24 beispielsweise drei Batteriezellen, eine erste Batteriezelle 12, eine zweite Batteriezelle 14 und eine dritte Batteriezelle 16. Der erste Behälter 24, in dem die Anzahl von Batteriezellen 12, 14, 16 aufgenommen ist, ist von einer ersten Gehäusewand 28 umschlossen.

Erfindungsgemäß lässt sich durch das Energiespeichersystem gemäß der Zeichnung ein hinsichtlich Temperaturüberschreitung unerwünscht reagierendes Gerät, insbesondere die in dem Energiespeichersystem 10 im ersten Behälter 24 vorgesehenen Batteriezellen 12, 14, 16, schnell unterhalb einer kritischen Temperatur abkühlen. Bei dem Energiespeichersystem 10 gemäß der Zeichnung handelt es sich insbesondere um eine Lithiumionen-Batterie mit einer Anzahl von Batteriezellen 12, 14, 16, die nicht notwendigerweise auf die in der Zeichnung dargestellten drei Batteriezellen beschränkt ist, sondern durchaus auch eine höhere Anzahl von Batteriezellen aufweisen kann. Für ein derart konfiguriertes Energiespeichersystem 10 in Gestalt einer Lithiumionen-Batterie gelten die nachfolgenden Ausführungen sinngemäß.

Die Abbildung unterhalb einer kritischen Schwelltemperatur erfolgt erfindungsgemäß durch das Aufheben der Druckdifferenz zwischen den beiden Behältern 24, bzw. 40. Der erste Behälter 24 steht - wie der Zeichnung zu entnehmen ist- in thermischem Kontakt mit den zu kühlenden Punkten des abzukühlenden Gerätes, d.h. in der Ausführungsvariante gemäß der Zeichnung mit den Batteriezellen 12, 14, 16. Der thermische Kontakt wird durch eine saugfähige Schicht 44 hergestellt, die in Kontakt mit einer jeden der Batteriezellen 12, 14, 16 innerhalb des ersten Behälters 24 steht.

Der zweite Behälter 40 dient dazu, die für eine Gasexpansion erforderliche Druckdifferenz Δp zum ersten Behälter 24 herzustellen. Erfindungsgemäß befindet sich im ersten Behälter 24 eine Flüssigkeit 26 sowie im zweiten Behälter 40 ein diese Flüssigkeit 26 absorbierendes Material, so zum Beispiel ein hydrophiles Material wie Zeolith oder ein Molekularsieb. Dadurch lässt sich eine Erhöhung der Kühlleistung durch Verdampfungskühlung erzeugen, wie nachfolgend noch eingehender dargelegt wird.

Des Weiteren ist die Gehäusewand 28 des ersten Behälters 24 insbesondere aus einem spröden Material beschaffen und weist vorzugsweise an den Übergangsstellen zu den thermisch kritischen Punkten, d.h. in dem Bereich, in dem die saugfähigen Schichten 44 liegen, die jeweils den Batteriezellen 12, 14, 16 zugeordnet sind, zum Beispiel Sollbruchstellen 38 auf. Die Gehäusewand 18 des zweiten Behälters 40 umschließt insbesondere den ersten Behälter 24. Die Gehäusewand 18 des zweiten Behälters 40 ist aus einem weicheren elastisch formbaren Material gefertigt, welches bei mechanischer Beschädigung deformiert wird, jedoch seine Dichtheit beibehält und nicht undicht wird.

Die Initiierung der Notkühlung erfolgt bevorzugt durch das Zerbrechen eines spröde ausgelegten Trennelementes, im vorliegenden Falle der Gehäusewand 28, welche das Innere des ersten Behälters 24 vom zweiten Behälter 40 trennt. Das Zerbrechen des aus sprödem Material ausgebildeten Trennelementes, d.h. im vorliegenden Fall der Gehäusewand 28 des ersten Behälters 24 kann zum Beispiel in Folge eines Unfalles herbeigeführt werden oder durch Öffnen eines thermischen Ventils 34 bzw. durch Ansteuern eines in die erste Gehäusewand 28 zwischen dem ersten Behälter 24 und zweiten Behälter 40 integriertes elektrisch ansteuerbares Ventil 36.

Sowohl der erste Behälter 24, in dem sich die temperaturkritischen Punkte, d.h. die Batteriezellen 12, 14, 16, befinden und der mit einem Flüssigkeitsvorrat 26, wie zum Beispiel Wasser, befüllt ist, als auch das Innere des zweiten Behälters 40, welcher mit einem Gasvorrat 42 befüllt ist und der das hydrophile Material 22 aufnimmt, sind mit einem Restgas befüllt. Als Restgas wird bevorzugt ein Inertgas, wie N₂, Helium oder Argon oder dergleichen, eingesetzt, welches im Fall eines Brandes auch zu einer Unterbrechung der Sauerstoffzufuhr zum Brandherd beiträgt.

Wie der Zeichnung zu entnehmen ist, sind die thermisch kritischen Bereiche, wie im vorliegenden Falle die Batterien 12, 14, 16, innerhalb des ersten Behälters 24 an die jeweiligen saugfähigen Schichten 44 angekoppelt. Diese befinden sich innerhalb des ersten Behälters 24 und sind demzufolge mit der Flüssigkeit 26, so zum Beispiel Wasser, getränkt. Der erste Behälter 24 ist soweit wie möglich druckreduziert oder gar evakuiert, weist jedoch einen Mindestdruck auf, der unter Gasdruck der Flüssigkeit 26 im Falle von Wasser unterhalb des Dampfdruckes von Wasser liegt.

Die pneumatische Kopplung zwischen dem ersten Behälter 24 und dem zweiten Behälter 40 kann durch thermische Ventile 34, elektrisch ansteuerbare Ventile 36 hergestellt werden.

Im zweiten Behälter 40 ist das hydrophile Material 22 aufgenommen, bei dem es sich insbesondere um ein getrocknetes Zeolith oder um ein Molekularsieb oder eine andersartige Vorrichtung handeln kann, welche die verdampfte Flüssigkeit 26 im gasförmigen Zustand aufnimmt. Des Weiteren besteht auch die Möglichkeit, im zweiten Behälter 40 eine Unterdruckpumpe anzuordnen. Analog zum ersten Behälter 24 herrscht auch im zweiten Behälter 40 ein sehr niedriger Druck oder gar Vakuum.

Erfolgt nun eine Unterbrechung der Verbindung zwischen dem ersten Behälter 24 und dem zweiten Behälter 40 durch ein Zerbrechen der spröde ausgebildeten, als Trennelement dienenden Gehäusewand 28 oder durch Aufbrechen einer Sollbruchstelle 38 oder durch Ansprechen eines oder mehrerer thermischer Ventile 34 oder durch die Ansteuerung eines elektrischen Ventils 36, so wird die Druckdifferenz zwischen den beiden Behältern 24 und 40 ausgeglichen. Es erfolgt eine schlagartige Reduzierung des Druckes im ersten Behälter 24 unter dem Dampfdruck der dort bevorrateten Flüssigkeit 26, was zu einem Verdampfen der Flüssigkeit aus den jeweiligen saugfähigen Schichten 44 führt, die mit den Batteriezellen 12, 14, 16 gekoppelt sind.

Das aus der Flüssigkeit 26 entstandene Gas wird von dem mit diesem in Verbindung tretenden hydrophilen Material 22, wie zum Beispiel getrockneter Zeolith oder ein Molekularsieb, absorbiert, wodurch sich kein sofortiges Gleichgewicht zwischen dem ersten Behälter 24 und dem zweiten Behälter 40 einstellen kann. Infolgedessen bleibt der Druck des Gesamtsystems bei zerborstenem Trennelement 28 weiter unterhalb des Gasdrucks der Flüssigkeit 26, so dass ein weiteres Verdampfen derselben möglich ist.

Aufgrund des Umstandes, dass sich das hydrophile Material 22 bei diesem Prozess erwärmt, wird das hydrophile Material 22 mit einer Wärmesenke, so zum Beispiel der Fahrzeugkarosserie eines Fahrzeugs, in dem das Energiespeichersystem 10 aufgenommen ist, gekoppelt.
Nach erfolgter erfindungsgemäßer Notabkühlung wird durch Erwärmen des hydrophilen Materials 22 ein Abdampfen der Flüssigkeit 26 möglich, so dass die saugfähigen Schichten 44 erneut mit Flüssigkeit getränkt werden können, wodurch der ursprüngliche Zustand und damit die Funktionsfähigkeit des erfindungsgemäß vorgeschlagenen Energiespeichersystems 10 wiederhergestellt werden können.

Zur Realisierung des erfindungsgemäß vorgeschlagenen Energiespeichersystems 10 kann die Außenhülle des Energiespeichersystems 10 zum Beispiel doppelwandig ausgeführt sein und durch die Gehäusewand 18 und die einen Hohlraum zu dieser bildende Gehäusewand 28 der Behälter 24, 40, gebildet sein. Von besonderer Wichtigkeit ist, dass die Gehäusewand 18 des zweiten Behälters 40 zäh und dicht ausgeführt wird, was zum Beispiel durch Einsatz von Materialien, wie Aluminium oder Thermoplasten, erreicht werden kann. Der zweite Behälter 40 muss nicht notwendigerweise das gesamte Energiespeichersystem 10 umschließen, sondern kann auch nur Teile desselben ausmachen. Des Weiteren besteht die Möglichkeit, den zweiten Behälter 40 außerhalb oder komplett getrennt vom Energiespeichersystem 10 anzuordnen und die Verbindung zum ersten Behälter 24 über Schläuche oder eine geeignete Verrohrung zu realisieren. Der zweite Behälter 40 kann zum Beispiel Teil einer Fahrzeugkarosserie, so zum Beispiel durch die Längs- oder Querträger im Fahrzeugrahmen, gebildet sein. Eine Absenkung im zweiten Behälter 40 kann zum Beispiel über eine Unterdruckpumpe oder über den in einer Verbrennungsmaschine herrschenden Unterdruck realisiert werden. Des Weiteren besteht die Möglichkeit, den zweiten Behälter 40 über eine elektrisch betreibbare Unterdruckpumpe, die zum Beispiel auch zur Nutzung der Bremskraftunterstützung genutzt wird, zu evakuieren. Anstelle eines Unterdrucks kann auch ein Überdruck im Gas im ersten Behälter 24 in Bezug auf das im zweiten Behälter 40 herrschende Druckniveau erzeugt werden, der bei der Expansion die Kühlwirkung erzeugt.

Anstelle der Ausbildung des Trennelements, d.h. der Gehäusewand 28 des ersten Behälters 24 aus Zeolithen oder dessen Ausbildung als Molekularsieb, können auch andere flüssigkeitsabsorbierende Stoffe eingesetzt werden. Dafür eignen sich insbesondere Materialien, die sehr feinporös sind und folglich eine sehr große innere Oberfläche besitzen, wie zum Beispiel Aktivkohle oder Silicagel. Das Restgas, mit dem der erste Behälter 24 bzw. der zweite Behälter 40 befüllbar sind, ist erfindungsgemäß ein Inertgas, welches zur Oxidationsvermeidung dient. Das Gas kann farbig oder auffällig riechend sein, um bei einem Austreten aus der Außenhülle die Gefährdung durch fehlende Kühlwirkung zu signalisieren. Das Gas kann auch zusätzliche flüssige oder feste Bestandteile enthalten, welche einer Brandausbreitung entgegenwirken. Anstelle eines Inertgases kann auch Luft eingesetzt werden.

Die als Trennelement 28 dienende Gehäusewand 28 des ersten Behälters 24 ist aus einem zerbrechlichen Material oder einem spröden Material zu fertigen. Mittels Sollbruchstellen 38 ist eine Möglichkeit einer gezielten Öffnung bereits vorgegeben. Die Sollbruchstellen, vgl. Position 38 in der Zeichnung, können alternativ auch bereits durch die Zell- oder Modulwände der Batteriezellen 12, 14, 16 selbst gebildet werden.

Neben einem Zerbrechen des Trennelementes 28, d.h. im vorliegenden Ausführungsbeispiel der Gehäusewand, die den ersten Behälter 24 vom zweiten Behälter 40 trennt, lässt sich die Druckdifferenz zwischen dem ersten Behälter 24 und dem zweiten Behälter 40 auch dadurch aufheben, dass ein elektronisch gesteuertes Ventil, so zum Beispiel ein elektrisches Ventil 36, welches in die Gehäusewand 28 integriert ist, angesteuert wird. Ein damit einhergehendes Initiieren des Abkühlprozesses kann optional zur mechanischen Einwirkung auch durch einen chemischen Prozess angestoßen werden. Des Weiteren lässt sich der Abkühlprozess, d.h. die Aufhebung der Druckdifferenz zwischen dem ersten Behälter 24 und dem zweiten Behälter 40, auch durch ein Bimetall herbeiführen. Schließlich besteht die Möglichkeit, das Trennelement, d.h. die erste Gehäusewand 28 zwischen dem ersten Behälter 24 und dem zweiten Behälter 40, ein thermisches Ventil 34, so zum Beispiel eine Wachspille, zu integrieren, die bei Erreichen einer Temperatur ganz oder teilweise schmilzt, so dass sich ein Druckausgleich zwischen dem Innenraum des ersten Behälters 24 und dem Innenraum des zweiten Behälters 40 herbeiführen lässt.

Aus der Darstellung gemäß der Zeichnung geht hervor, dass sich im ersten Behälter 24 Spalte 46 zwischen den jeweiligen Saugschichten 44 und den Batteriezellen 12, 14, 16 erstrecken. Diese Spalte oder Kanäle 46 erlauben eine möglichst direkte Wärmeanbindung an die thermisch kritischen Bereiche, d.h. die Batteriezellen 12, 14, 16. Die Spalte bzw. Kanäle stellen Gaskanäle an, welche die saugfähigen Schichten 44 thermisch ankoppeln. Alternativ müssen diese Spalte bzw. Kanäle 46 nicht in die thermisch kritischen Bereiche, im vorliegenden Fall die Batteriezellen 12, 14, 16, hineingeführt werden, sondern können über thermisch gut leitende Elemente indirekt die Kühlung herbeiführen. In diesem Falle werden die Kanäle 46 nicht bis an die Batteriezellen 12, 14, 16 herangeführt, sondern diese werden über thermisch leitende Materialien, so zum Beispiel Metalle oder Metalllegierungen, mit der saugfähigen Schicht 44 gekoppelt.

Die Kühlung der thermisch kritischen Bereiche, d.h. der Batteriezellen 12, 14, 16 des erfindungsgemäß vorgeschlagenen Energiespeichersystems 10 optional auch über die Ankopplung einer Verdampfungskühlungseinrichtung an einen Kühlkreislauf des Gerätes so zum Beispiel den Flüssigkeitskühlkreislauf des Energiespeichersystems 10 erfolgen.

Wird beim erfindungsgemäßen vorgeschlagenen Energiespeichersystem nur eine Expansion bei Erreichen einer kritischen Temperatur zur Kühlung gewünscht, so kann die Expansion über Ventile 34, 36 oder eine Sprengkapsel automatisch von einem Steuergerät ausgelöst werden. Dies ermöglicht eine selektivere Auslösung. Ein Auslösen des erfindungsgemäß vorgeschlagenen Notkühlprozesses kann bei Erkennung eines Fahrzeugunfalls über ein Steuergerät oder ein elek-trisch angesteuertes Ventil 36 initiiert werden. Ein Auslösen des Notkühlprozesses kann bei Erkennen einer Übertemperatur zum Beispiel über einen Temperatursensor oder ein Temperaturmodell, welches im Steuergerät hinterlegt ist, gestartet werden. Ein Auslösen des erfindungsgemäß vorgeschlagenen Notabkühlprozesses kann bei Erkennen eines unsachgemäßen Eingriffes, so zum Beispiel bei Öffnen der Gehäusewände 18 bzw. 28 des Energiespeichersystems 10, ausgelöst werden. Ein Auslösen des Abkühlprozesses lässt sich des Weiteren bei sich einstellender Leckage der Flüssigkeit 26 aus dem ersten Behälter 24 bzw. bei einem sich einstellenden Gasverlust aus dem zweiten Behälter 40 triggern. Leistung und Abkühlgeschwindigkeit lassen sich durch Regelung eines Kältemittelstroms vorgeben, wenn die Verbindung zwischen dem ersten Behälter 24 und dem zweiten Behälter 40 nicht durch mechanisch irreversible Zerstörung des Trennelementes, d.h. der Gehäusewand 28 zwischen dem ersten Behälter 24 und dem zweiten Behälter 40, vorgenommen wurde, sondern durch selektives Ansteuern eines elektrischen Ventils 36 oder durch Ansprechen eines thermischen Ventils 34, wie der oben stehend erwähnten Wachspille. Das Ventil 36 kann zum Beispiel als Druckbegrenzungsventil ausgelegt sein oder elektrisch angesteuert werden. Daneben kann das Ventil 36 pneumatisch, hydraulisch oder thermisch gesteuert sein.

Die Funktionsfähigkeit des erfindungsgemäß vorgeschlagenen Energiespeichersystems 10 bzw. von dessen Notkühlmöglichkeit und damit die Sicherheit der vorgeschlagenen Lösung können durch zusätzlich vorgesehene Sensoren überwacht werden. So ist zum Beispiel eine Drucksensorik zur Überwachung des Druckes in dem ersten Behälter 24 bzw. dem zweiten Behälter 40 einsetzbar. Eine Feuchtigkeitssensorik kann zur Überwachung des Feuchtigkeitsgehalts bzw. der Feuchte in der saugfähigen Schicht 44 innerhalb des ersten Behälters 24 eingebaut werden. Des Weiteren lässt sich eine Temperatursensorik vorsehen, die die Temperatur der einzelnen Batteriezellen 12, 14, 16 innerhalb des ersten Behälters 24 des Energiespeichersystems 10 überwacht.

Eine Initiierung des Notabkühlprozesses des Energiespeichersystems 10 kann optional ein Trennen der externen Spannungsversorgung von den Batteriezellen oder den Batteriemodulen 12, 14, 16 des Energiespeichers 10 auslösen. Ein Trennen der externen Spannungsversorgung vom Energiespeichersystem kann automatisch über ein Druckdifferenzrelais oder einen Drucksensor überwacht sein.

Die Erzeugung eines niedrigen Druckniveaus bzw. eines Vakuums innerhalb des ersten Behälters 24 und des zweiten Behälters 40 wird bevorzugt durch deren Anschluss an einen Unterdruckbehälter bzw. eine Unterdruckquelle realisiert. Dazu kann beispielsweise eine für die Lenkhilfe eines Fahrzeugs vorgesehene Unterdruckpumpe angezapft werden. Optional lässt sich die erfindungsgemäß vorgeschlagene Lösung auch mittels einer handbetriebenen Pumpe zur Erzeugung von Unterdruck erreichen, was die Sicherheit des Gesamtsystems auch bei einer fehlenden Unterdruckversorgung sicherstellt.

Nach einem erfolgten Notkühlvorgang lässt sich eine Regeneration des erfindungsgemäß vorgeschlagenen Energiespeichersystems dadurch wiederherstellen, dass eine entscheidende Eigenschaft von zum Beispiel als hydrophiles Material eingesetzten Zeolithen ausgenutzt wird, die mehrere 100 bis 1000 Zyklen reversibel dehydrierbar sind. Bevorzugt wird das Entfeuchten durch langsames Einbringen externer Wärme umgesetzt. Alternativ dazu kann eine Regeneration des hydrophilen Materials 22 innerhalb des zweiten Behälters 40 durch Einbringen von Abwärmen des Gerätes, d.h. durch Einbringen von Verlustwärme der Batterie, erfolgen. Eine Regeneration kann des Weiteren durch Anschluss an einen externen Gaskreislauf erfolgen, der den zweiten Behälter 40 mit warmer getrockneter Luft versorgt. Die Regeneration des hydrophilen Materials 22 innerhalb des zweiten Behälters 40 kann darüber hinaus auch durch eine Versorgung mit Unterdruck erfolgen, wodurch die adsorbierten Flüssigkeitsmoleküle, die zum Beispiel in Zeolithen oder in der Aktivkohle oder im Silicagel adsorbiert sind, wieder abzudampfen vermögen.

Die erfindungsgemäß vorgeschlagene Lösung durch die Aufhebung der Trennung zwischen zwei Behältern 24 bzw. 40 eines Energiespeichersystems 10 kann auch mehrstufig erfolgen. Hierbei können mehrere ineinander geschachtelte Behälter 24, 40 zur Verbesserung des Prozesswirkungsgrades kaskadisch miteinander verschaltet werden.

## Patentansprüche

1. Energiespeichersystem (10), insbesondere eine Batterie mit einer Anzahl von Batteriezellen (12, 14, 16), die in einem ersten Behälter (24) aufgenommen sind, wobei der erste Behälter (24) von einem zweiten Behälter (40) durch ein Trennelement (28) getrennt ist, durch das eine eine Gasexpansion aus dem ersten Behälter (24) ermöglichende Druckdifferenz Δp gegenüber dem zweiten Behälter (40) hergestellt wird, wobei der erste Behälter (24), der die Anzahl von Batteriezellen (12, 14, 16) aufnimmt, mit einer Flüsslgkeit (26) und mit einem Inertgas befüllt ist, wobei im zweiten Behälter (40) eine Flüssigkeit (26) aus dem ersten Behälter (24) absorbierendes, hydrophiles Material (22) angeordnet ist **dadurch gekennzeichnet, dass** das hydrophile Material (22) ein Zeolith, ein Molekularsieb oder Silicagel ist.

2. Energiespeichersystem (10) gemäß Anspruch 1, **dadurch gekennzeichnet, dass** der zweite Behälter (40) eine deformierbare Gehäusewand (18) aufweist.

3. Energiespeichersystem (10) gemäß Anspruch 1, **dadurch gekennzeichnet, dass** der zweite Behälter (40) den ersten Behälter (24) umschließt.

4. Energiespeichersystem (10) gemäß Anspruch 1, **dadurch gekennzeichnet, dass** der die Anzahl von Batteriezellen (12, 14, 16) aufnehmende erste Behälter (24) eine als Trennelement (28) dienende Gehäusewand aufweist, die aus einem spröden, leicht zerbrechbarem Material gefertigt ist.

5. Energiespeichersystem (10) gemäß Anspruch 1, **dadurch gekennzeichnet, dass** das Trennelement (28) entweder Sollbruchstellen (38) und/oder thermische Ventile (34) und/oder elektrisch betätigbare Ventile (36) aufweist, durch die eine Verbindung zwischen dem ersten Behälter (24) und dem zweiten Behälter (40) hergestellt wird.

6. Energiespeichersystem (10) gemäß Anspruch 1, **dadurch gekennzeichnet, dass** der erste Behälter (24) und der zweite Behälter (40) mit einem Inertgas, wie zum Beispiel N₂, He, Ar, zur Hemmung oder Unterbrechung der Sauerstoffzufuhr zu der Anzahl von Batteriezellen (12, 14, 16) restbefüllt sind.

7. Energiespeichersystem (10) gemäß einem oder mehreren der vorhergehenden Ansprüche, **dadurch gekennzeichnet, dass** thermisch kritische Stellen, insbesondere die Anzahl von Batteriezellen (12, 14, 16), im ersten Behälter (24) thermisch an eine saugfähige Schicht (44), die mit der Flüssigkeit (26) getränkt ist, gekoppelt ist und der erste Behälter (24) weitestgehend druckreduziert oder evakuiert ist sowie einen Mindestdruck aufweist, der unter dem Gasdruck der Flüssigkeit (26) liegt.

8. Energiespeichersystem (10) gemäß einem oder mehreren der vorhergehenden Ansprüche, **dadurch gekennzeichnet, dass** das hydrophile Material (22) im zweiten Behälter (40) thermisch mit einer Wärmesenke, insbesondere einer Fahrzeugkarosserie, gekoppelt ist, und der zweite Behälter (40) druckreduziert oder evakuiert ist.

## Claims

1. Energy storage system (10), in particular a battery, having a number of battery cells (12, 14, 16), which are accommodated in a first container (24), wherein the first container (24) is separated from a second container (40) by a separating element (28), by which a pressure difference Δp, which allows a gas to expand out of the first container (24), is established with respect to the second container (40), wherein the first container (24), which accommodates the number of battery cells (12, 14, 16), is filled with a liquid (26) and with an inert gas, wherein hydrophilic material (22) that absorbs a liquid (26) from the first container (24) is arranged in the second container (40), **characterized in that** the hydrophilic material (22) is a zeolite, a molecular sieve or silica gel

2. Energy storage system (10) according to Claim 1, **characterized in that** the second container (40) has a deformable housing wall (18).

3. Energy storage system (10) according to Claim 1, **characterized in that** the second container (40) encloses the first container (24).

4. Energy storage system (10) according to Claim 1, **characterized in that** the first container (24), accommodating the number of battery cells (12, 14, 16), has a housing wall which functions as a separating element (28) and is produced from a brittle, easily breakable material.

5. Energy storage system (10) according to Claim 1, **characterized in that** the separating element (28) has either intended breaking points (38) and/or thermal valves (34) and/or electrically operable valves (36), by which a connection is established between the first container (24) and the second container (40).

6. Energy storage system (10) according to Claim 1, **characterized in that** the first container (24) and the second container (40) are for the remainder filled with an inert gas, such as for example N₂, He or Ar, to inhibit or interrupt the supply of oxygen to the number of battery cells (12, 14, 16).

7. Energy storage system (10) according to one or more of the preceding claims, **characterized in that** thermally critical locations, in particular the number of battery cells (12, 14, 16), in the first container (24) are thermally coupled to an absorbent layer (44), which is impregnated with the liquid (26), and the first container (24) is to the greatest extent under a reduced pressure or is evacuated and has a minimum pressure, which is below the vapour pressure of the liquid (26).

8. Energy storage system (10) according to one or more of the preceding claims, **characterized in that** the hydrophilic material (22) in the second container (40) is thermally coupled to a heat sink, in particular a body of a vehicle, and the second container (40) is under a reduced pressure or is evacuated.

## Revendications

1. Système accumulateur d'énergie (10), en particulier batterie comprenant une pluralité de cellules de batterie (12, 14, 16), qui sont reçues dans un premier contenant (24), le premier contenant (24) étant séparé d'un deuxième contenant (40) par un élément de séparation (28) par lequel est produite une différence de pression Δp par rapport au deuxième contenant (40), permettant une extension de gaz hors du premier contenant (24), le premier contenant (24), qui reçoit la pluralité de cellules de batterie (12, 14, 16), étant rempli d'un liquide (26) et d'un gaz inerte, un matériau hydrophile (22) absorbant un liquide (26) provenant du premier contenant (24) étant disposé dans le deuxième contenant (40), **caractérisé en ce que** le matériau hydrophile (22) est une zéolithe, un tamis moléculaire ou un gel de silice.

2. Système accumulateur d'énergie (10) selon la revendication 1, **caractérisé en ce que** le deuxième contenant (40) présente une paroi de boîtier déformable (18).

3. Système accumulateur d'énergie (10) selon la revendication 1, **caractérisé en ce que** le deuxième contenant (40) entoure le premier contenant (24).

4. Système accumulateur d'énergie (10) selon la revendication 1, **caractérisé en ce que** le premier contenant (24) recevant la pluralité de cellules de batterie (12, 14, 16) présente une paroi de boîtier servant d'élément de séparation (28), laquelle est fabriquée en un matériau poreux facilement cassable.

5. Système accumulateur d'énergie (10) selon la revendication 1, **caractérisé en ce que** l'élément de séparation (28) présente soit des zones destinées à la rupture (38) et/ou des soupapes thermiques (34) et/ou des soupapes à commande électrique (36), par lesquelles une liaison entre le premier contenant (24) et le deuxième contenant (40) est établie.

6. Système accumulateur d'énergie (10) selon la revendication 1, **caractérisé en ce que** le premier contenant (24) et le deuxième contenant (40) sont remplis d'un gaz inerte, comme par exemple N₂, He, Ar, pour inhiber ou supprimer l'alimentation d'oxygène à la pluralité de cellules de batterie (12, 14, 16).

7. Système accumulateur d'énergie (10) selon l'une quelconque ou plusieurs des revendications précédentes, **caractérisé en ce que** des points thermiques critiques, en particulier la pluralité de cellules de batterie (12, 14, 16), sont accouplés thermiquement dans le premier contenant (24) à une couche absorbante (44), qui est imbibée de liquide (26), et le premier contenant (24) est essentiellement dépressurisé ou évacué et présente une pression minimale qui est inférieure à la pression de gaz du liquide (26).

8. Système accumulateur d'énergie (10) selon l'une quelconque ou plusieurs des revendications précédentes, **caractérisé en ce que** le matériau hydrophile (22) est accouplé thermiquement dans le deuxième contenant (40) à un puits thermique, en particulier une carrosserie du véhicule, et le deuxième contenant (40) est dépressurisé ou évacué.
